# EUROPÄISCHE PATENTSCHRIFT

(11) **EP 2 460 001 B1**
(45) Veröffentlichungstag und Bekanntmachung des Hinweises auf die Patenterteilung: **07.12.2016**
(21) Anmeldenummer: 10725200.9
(22) Anmeldetag: 22.06.2010
(51) Int. Cl.: G01N 29/036, G01N 29/02, G01F 23/296, G01N 9/00, G01N 11/10

(54) **VERFAHREN ZUR BESTIMMUNG UND/ODER ÜBERWACHUNG MINDESTENS EINER PHYSIKALISCHEN PROZESSGRÖSSE EINES MEDIUMS MIT EINER SCHWINGFÄHIGEN EINHEIT**
METHOD FOR DETERMINATION AND/OR MONITORING OF AT LEAST ONE PROCESS PARAMETER OF A MEDIUM WITH A VIBRATING ELEMENT
PROCÉDÉ POUR LA DÉTERMINATION ET/OU LA SURVEILLANCE D'AU MOINS UN PARAMÈTRE DU PROCÉDÉ D'UN MEDIUM AVEC UN ÉLÉMENT VIBRATOIRE

(30) Priorität: 27.07.2009 DE 102009028022
(43) Veröffentlichungstag der Anmeldung: 06.06.2012
(73) Patentinhaber: Endress+Hauser GmbH+Co. KG, 79689 Maulburg (DE)
(72) Erfinder: URBAN, Martin, 79541 Lörrach (DE)
(74) Vertreter: Andres, Angelika Maria
(86) Internationale Anmeldenummer: PCT/EP2010/058801
(87) Internationale Veröffentlichungsnummer: WO 2011/012377

(56) Entgegenhaltungen:
- EP-A1- 0 985 916
- DE-A1-102007 008 669
- DE-U1-202007 017 911
- US-A1- 2007 100 578

## Beschreibung

Die vorliegende Erfindung betrifft ein Verfahren zur Bestimmung und/oder Überwachung mindestens einer physikalischen Prozessgröße eines Mediums mit einer schwingfähigen Einheit, wobei die schwingfähige Einheit mittels eines Frequenzsuchlaufs (Sweep) innerhalb eines vorbestimmten Frequenzbandes im Arbeitsbereich der schwingfähigen Einheit in Form von Sendesignalen sukzessive mit aufeinanderfolgenden diskreten Erregerfrequenzen zu Schwingungen angeregt wird, wobei die entsprechenden Schwingungen der schwingfähigen Einheit in Form von Empfangssignalen empfangen werden, wobei über den Frequenzsuchlauf die Erregerfrequenz ermittelt wird, bei der die schwingfähige Einheit mit einer Schwingungsfrequenz schwingt, die eine vorgegebene Phasenverschiebung zwischen dem Sendesignal und dem Empfangssignal aufweist, und wobei eine Sende-/Empfangseinheit die schwingfähige Einheit mit der ermittelten Schwingfrequenz zu Schwingungen anregt oder wobei der nachfolgende Frequenzsuchlauf gestartet wird.

Bei der Prozessgröße handelt es sich beispielsweise um einen vorbestimmten Füllstand des Mediums, um die Phasengrenze, um die Dichte oder um die Viskosität des Mediums.

Mit vibronischen Messgeräten kann eine Vielzahl an physikalischen Größen wie beispielsweise der Füllstand, die Phasengrenze, die Dichte oder die Viskosität eines Mediums in einem Behälter oder in einer Rohrleitung detektiert oder überwacht werden. Die Anmelderin bietet solche Messgeräte unter einer großen Vielfalt an Ausgestaltungen unter den Bezeichnungen Liquiphant und Soliphant an.

Vibronische Messgeräte weisen eine schwingfähige Einheit auf, welche meist eine Membran und einen darauf befestigten Schwingstab oder eine aus zwei Zinken bestehende Schwinggabel umfasst. Es sind aber auch vibronische Messgeräte bekannt, deren schwingfähige Einheit nur aus einer Membran besteht.

Die Anregung der schwingfähigen Einheit zu Schwingungen mit der Resonanzfrequenz erfolgt üblicherweise durch einen piezoelektrischen Stapel- oder Bimorphantrieb oder über elektrodynamische Antriebselemente, wobei die Antriebseinheit meist als kombinierte Sende-/Empfangseinheit ausgestaltet ist. Das Sendesignal und das Empfangssignal weisen eine Phasenverschiebung auf, welche üblicherweise in einem definierten Bereich um 90° liegt.

Zur Füllstandsmessung wird der Effekt ausgenutzt, dass sich die Schwingfrequenz und Schwingamplitude ändern, wenn sich der Bedeckungsgrad der schwingfähigen Einheit ändert. In Luft findet eine ungedämpfte Schwingung statt, während die Schwingung bei der Bedeckung der schwingfähigen Einheit mit Medium gedämpft wird. Diese Änderung in der Schwingamplitude oder Schwingfrequenz wird genutzt, um das Erreichen eines vorbestimmten Füllstands, üblicherweise ein maximaler Füllstand zum Überlaufschutz oder ein minimaler Füllstand zum Leerlaufschutz, zu detektieren.

Die Schwingamplitude einer Schwinggabel oder eines Schwingstabs hängt weiterhin davon ab, wie viel Masse mitbewegt wird. Ändert sich die Dichte oder die Phase eines Mediums, so beeinflusst dies folglich auch die Schwingung der schwingfähigen Einheit, sodass der Übergang zwischen unterschiedlichen Phasen sowie Dichteänderungen mit dem vibronischen Messgerät detektiert werden können.

In ähnlicher Weise wird die Schwingung gedämpft, wenn die Viskosität des Mediums zunimmt.

Um die Erregerfrequenz so einzustellen, dass die schwingfähige Einheit mit einer vorgegebenen Phasenverschiebung zwischen Sendesignal und Empfangssignal schwingt, hat die Anmelderin ein Verfahren mit einem so genannten Frequenzsweep entwickelt. Eine entsprechende Patentanmeldung (Aktenzeichen DE 102009026685) wurde eingereicht, ist bislang jedoch noch nicht veröffentlicht. Das Verfahren soll an dieser Stelle kurz beschrieben werden.

Bei dem Frequenzsweep wird die schwingfähige Einheit sukzessive mit diskreten, dicht beieinander liegenden Frequenzen zu Schwingungen angeregt und die der vorgegebenen Phasenverschiebung entsprechende Frequenz ermittelt. Die Ermittlung der Frequenz erfolgt hierbei über phasenselektive Gleichrichtung und nachfolgende Tiefpassfilterung. Ein um die vorgegebene Phasenverschiebung gegenüber dem Empfangssignal verzögertes Rechtecksignal wird mit dem Empfangssignal multipliziert. Entspricht die Phasenverschiebung zwischen dem Sendesignal und dem Empfangssignal der vorgegebenen Phasenverschiebung, so enthält dieses Produkt nur positive Anteile, während es im gegenteiligen Fall auch negative Anteile aufweist. Die beschriebene Auswertungsmethode kann analog oder digital realisiert werden. Der Aufbau mit analogen Bauteilen weist hierbei zwei Nachteile auf. Zum einen ist der Schaltungsaufwand hoch und zum anderen ist die Bestimmung der Schwingfrequenz bei der vorgegebenen Phasenverschiebung relativ ungenau. Die Vorteile bei der digitalen Umsetzung des Verfahrens ist, dass der hohe Schaltungsaufwand nicht besteht und die Schwingfrequenz zudem mit hoher Genauigkeit bestimmt werden kann. Der Nachteil des digitalen Verfahrens ist jedoch, dass es sehr rechenintensiv ist, was eine hohe Rechenleistung erforderlich macht.

In der Anmeldung US2007100578 wird mittels des frequenzabhängigen Phasenverhaltens zwischen Anregungssignal und Empfangssignal und Vergleich mit einer Referenzprobe die zu untersuchende Probe untersucht.

Die Aufgabe der Erfindung besteht daher darin, ein Verfahren zur einfachen Auswertung eines Frequenzsuchlaufs bereitzustellen.

Die Aufgabe wird dadurch gelöst, dass die Schwingfrequenz bei der vorgegebenen Phasenverschiebung dadurch ermittelt wird, dass das Empfangssignal zu ausgewählten Zeitpunkten diskret abgetastet wird, wobei die ausgewählten Zeitpunkte von der vorgegebenen Phasenverschiebung zwischen Sendesignal und Empfangssignal abhängen und dass die bei den diskreten Erregerfrequenzen abgetasteten Spannungswerte Uᵢ des Empfangssignals in Bezug auf deren Amplitude ausgewertet werden.

Dadurch, dass das Empfangssignal nur zu ausgewählten Zeitpunkten diskret abgetastet wird, reduziert sich die Anzahl an Messpunkten, die gespeichert und weiterverarbeitet werden gegenüber dem Verfahren, bei welchem das gesamte Empfangssignal weiterverarbeitet wird. Hierdurch wird die erforderliche Rechenleistung reduziert. Ein weiterer Vorteil ist, dass die Auswertung im Wesentlichen digital erfolgt, was gegenüber einer analogen Umsetzung Zeit und Herstellungskosten erspart. Die verwendeten Bauteile dürfen hohe Toleranzen besitzen, da beispielsweise Rauschen herausgefiltert wird, sodass dennoch genaue Ergebnisse erzielt werden.

In einer ersten Ausgestaltung der erfindungsgemäßen Lösung werden zur Auswertung der abgetasteten Spannungswerte Uᵢ des Empfangssignals die negativen Anteile des Empfangssignals durch Gleichrichtung oder durch Addieren einer Offsetspannung in positive Spannungswerte umgewandelt.

Das Empfangssignal stellt eine Wechselspannung dar. Vor der Digitalisierung zur Auswertung des Empfangssignals werden die darin enthaltenen negativen Anteile bevorzugt in positive Anteile umgewandelt, um das Empfangssignal von einem Analog-Digital-Wandler auswertbar zu machen, welcher nur positive Eingangsspannungen verarbeiten kann. Kommt ein Analog-Digital-Wandler zum Einsatz, welcher sowohl negative als auch positive Eingangsspannungen verarbeiten kann, so ist die Umwandlung in positive Signale nicht erforderlich. Die Umwandlung in positive Spannungswerte geschieht entweder durch Gleichrichtung, d.h. durch Invertieren der negativen Spannungswerte, oder durch Addition einer Gleichspannung auf die Wechselspannung, sodass die gesamte Spannungskurve um einen bestimmten Wert (Offset) in den positiven Bereich verschoben wird. Der Offset ist hierbei so gewählt, dass zum einen alle negativen Spannungswerte in den positiven Bereich verschoben sind und zum anderen der Wert der maximal auftretenden Spannung die zulässige maximale Eingangsspannung des Analog-Digital-Wandlers nicht übersteigt.

Gemäß einer Weiterbildung des erfindungsgemäßen Verfahrens wird das Empfangssignal immer zu den Zeitpunkten abgetastet, zu welchen es bei Vorliegen der vorgegebenen Phasenverschiebung zwischen Sendesignal und Empfangssignal ein Extremum durchläuft.

Es werden also pro Schwingungsperiode immer zwei Spannungswerte des Empfangssignals abgetastet.

Bei einer weiteren Weiterbildung der Erfindung wird für den Fall, dass die vorgegebene Phasenverschiebung 90° beträgt, das Empfangssignal immer zu den Zeitpunkten abgetastet, zu welchen das Sendesignal bei Vorliegen der vorgegebenen Phasenverschiebung einen Nulldurchgang durchläuft.

Eine Weiterbildung des erfindungsgemäßen Verfahrens sieht vor, dass die abgetasteten Spannungswerte Uᵢ des Empfangssignals ausgewertet werden, indem die Frequenz bestimmt wird, bei welcher der Betrag des Spannungswerts |Uᵢ| maximal ist.

Entspricht das Empfangssignal bei einer Frequenz fₖ einer Schwingung mit der vorgegebenen Phasenverschiebung, so entspricht der zu den Abtastzeitpunkten detektierte Spannungswert der maximalen Schwingungsamplitude. Entspricht das Empfangssignal bei einer Frequenz fₗ nicht der Schwingung mit der vorgegebenen Phasenverschiebung, so wird zu den Abtastzeitpunkten nicht die maximale Amplitude detektiert, sondern ein geringerer Spannungswert. Trägt man die bei verschiedenen Frequenzen zu den Abtastzeitpunkten bestimmten Spannungswerte auf, so ergibt sich eine Kurve mit einem Maximum bei der Frequenz fₖ, bei welcher das Sendesignal und das Empfangssignal die vorgegebene Phasenverschiebung aufweisen.

Eine Weiterbildung des erfindungsgemäßen Verfahrens sieht vor, dass die abgetasteten Spannungswerte Uᵢ des Empfangssignals ausgewertet werden, indem die Beträge der über mehrere Schwingungsperioden gleicher Frequenz hinweg abgetasteten Spannungswerte |Uᵢ| zu einem Wert Σ |Uᵢ| addiert werden und die Frequenz bestimmt wird, bei welcher der zugehörige Wert Σ |Uᵢ| maximal ist.

Eine Weiterbildung der erfindungsgemäßen Lösung besteht darin, dass das Empfangssignal immer zu den Zeitpunkten abgetastet wird, zu welchen es bei Vorliegen der vorgegebenen Phasenverschiebung zwischen Sendesignal und Empfangssignal Nulldurchgänge und Extrema durchläuft.

Pro Schwingungsperiode werden also vier Spannungswerte abgetastet.

Bei einer Weiterbildung des erfindungsgemäßen Verfahrens wird für den Fall, dass die vorgegebene Phasenverschiebung 90° beträgt, das Empfangssignal immer zu den Zeitpunkten abgetastet, zu welchen das Sendesignal bei Vorliegen der vorgegebenen Phasenverschiebung einen Nulldurchgang durchläuft und zu den Zeitpunkten, zu welchen das Sendesignal bei Vorliegen der vorgegebenen Phasenverschiebung ein Extremum durchläuft.

Gemäß einer Weiterbildung des erfindungsgemäßen Verfahrens werden die abgetasteten Spannungswerte Uᵢᵢ, Uᵢⱼ des Empfangssignals ausgewertet, indem die Beträge jeweils zwei aufeinander folgender Spannungswerte |Uᵢᵢ|, |Uᵢⱼ|, welche bei der vorgegebenen Phasenverschiebung dem Spannungswert bei einem Nulldurchgang und dem Betrag des Spannungswerts an einem Extremum des Empfangssignals entsprechen, voneinander subtrahiert werden, und die Frequenz bestimmt wird, bei welcher die Differenz ΔU = |Uᵢᵢ| - |Uᵢⱼ| betragsmäßig maximal ist.

Unterscheiden sich die gemessenen Spannungswerte |Uᵢᵢ| von den maximalen Spannungswerten, welche bei der jeweiligen Frequenz auftreten, um einen Betrag dUᵢᵢ und unterscheiden sich die gemessenen Spannungswerte |Uᵢⱼ| von Null um einen Betrag dUᵢⱼ, so unterscheidet sich die Differenz ΔU um dUᵢᵢ + dUᵢⱼ vom maximalen Spannungswert bei der jeweiligen Frequenz. Betrachtet man nur die Spannungswerte, welche bei vorgegebener Phasenverschiebung Extrema entsprechen, so unterscheiden sich diese um einen geringeren Wert, nämlich dUᵢᵢ, von dem maximalen Spannungswert, welcher bei der jeweiligen Frequenz auftritt. Liegt die vorgegebene Phasenverschiebung vor, so ergibt sich bei der Differenzbildung zwischen dem Wert beim Maximum und dem Wert beim Nulldurchgang derselbe (maximale) Spannungswert, welcher sich nur durch Betrachtung des Maximums ergibt. Deshalb ist das Maximum um die der gewünschten Phasenverschiebung entsprechenden Frequenz bei Betrachtung der Differenzen ΔU ausgeprägter als bei der Methode, bei welcher nur die Spannungswerte, welche bei vorgegebener Phasenlage dem Maximum entsprechen, abgetastet und ausgewertet werden.

In einer Weiterbildung der erfindungsgemäßen Lösung werden die über mehrere Schwingungsperioden gleicher Frequenz hinweg abgetasteten Spannungswerte Uᵢᵢ, Uᵢⱼ des Empfangssignals so ausgewertet, dass die Beträge der abgetasteten Spannungswerte |Uᵢᵢ|, welche zu den Zeitpunkten abgetastet wurden, die bei der vorgegebenen Phasenverschiebung der Lage eines Extremums entsprechen, zu einem Wert Uₘₐₓ addiert werden, dass die Beträge der abgetasteten Spannungswerte |Uᵢⱼ|, welche zu den Zeitpunkten abgetastet wurden, die bei der vorgegebenen Phasenverschiebung der Lage eines Nulldurchgangs entsprechen, zu einem Wert U_{Null} addiert werden, dass die Werte Uₘₐₓ und U_{Null} voneinander subtrahiert werden und dass die Frequenz bestimmt wird, bei welcher die Differenz ΔU = Uₘₐₓ -U_{Null} betragsmäßig maximal ist.

Für jede Frequenz wird also jeweils nur ein Spannungswert zur Bestimmung der Frequenz bei der vorgegebenen Phasenverschiebung herangezogen.

Eine Weiterbildung des erfindungsgemäßen Verfahrens sieht vor, dass eine Phasenverschiebung zwischen Sendesignal und Empfangssignal eingestellt wird, die von der Güte der schwingfähigen Einheit abhängt

Gemäß einer weiteren Weiterbildung der erfindungsgemäßen Lösung wird eine Phasenverschiebung zwischen Sendesignal und Empfangssignal eingestellt, welche bevorzugt im Bereich zwischen 70° und 120° liegt.

Die vorgegebene Phasenverschiebung beträgt meist 90° oder liegt bevorzugt in dem angegebenen Bereich. Es ist jedoch gleichermaßen möglich, dass sie einen Wert außerhalb des angegebenen Bereichs annimmt, sofern die Güte der schwingfähigen Einheit dies zulässt.

Eine weitere Weiterbildung der Erfindung besteht darin, dass es sich bei der physikalischen Messgröße um einen vorbestimmten Füllstand des Mediums, um die Dichte, die Viskosität, oder die Phasengrenze des Mediums handelt.

Soll ein vorbestimmter Füllstand des Mediums in einem Behälter detektiert werden, so wird die schwingfähige Einheit auf der Höhe des vorbestimmten Füllstandes angebracht.

Die Erfindung wird anhand der nachfolgenden Figuren näher erläutert. Es zeigen:
- Fig. 1a: ein Beispiel für die Lage der Abtastpunkte bei einem der vorgegebenen Phasenverschiebung entsprechenden Empfangssignal mit der Frequenz fₖ;
- Fig. 1b: ein Beispiel für die Lage der Abtastpunkte bei einem außerhalb der vorgegebenen Phasenverschiebung liegenden Empfangssignal mit der Frequenz fₗ,
- Fig. 1c: das Empfangssignal aus Fig. 1a nach Gleichrichtung;
- Fig. 1d: das Empfangssignal aus Fig. 1a nach Addieren einer Gleichspannung;
- Fig. 2: ein Flussdiagramm des erfindungsgemäßen Verfahrens;
- Fig. 3: das zur Bestimmung der Frequenz bei der vorgegebenen Phasenverschiebung aufgenommene Histogramm

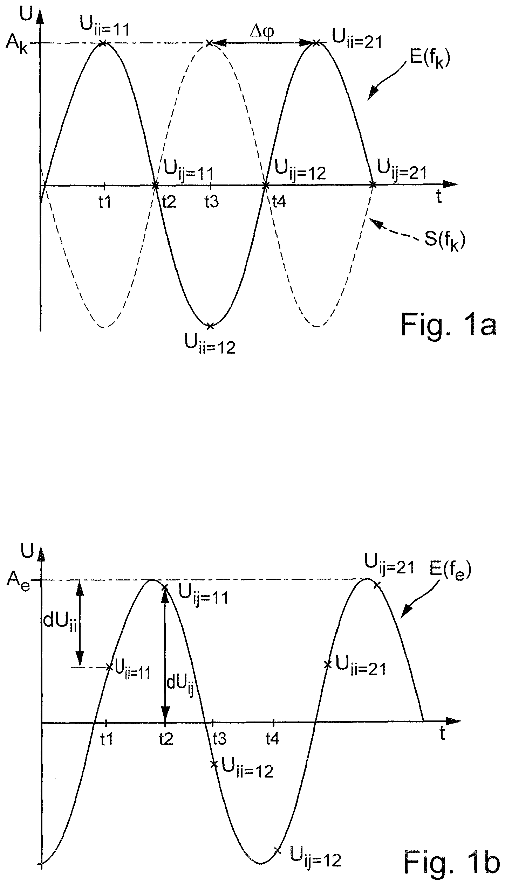

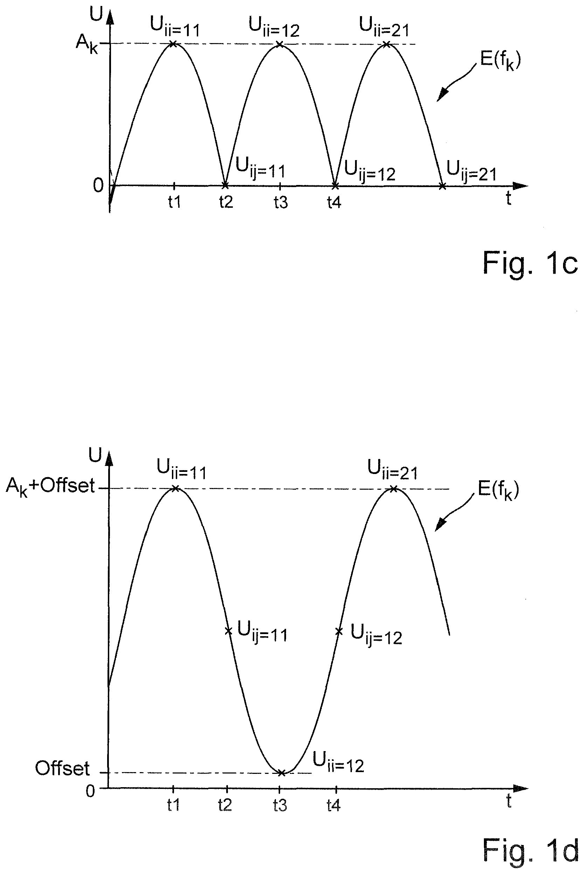

In Fig. 1 ist das Empfangssignal E bei einer Erregerfrequenz fₖ über eineinhalb Perioden dargestellt. Zum Vergleich ist das Sendesignal S ebenfalls aufgetragen. In Fig. 1a entspricht die Erregerfrequenz fₖ der vorgegebenen Phasenverschiebung Δϕ zwischen Sendesignal S und Empfangssignal E. Zu den Abtastzeitpunkten befindet sich das Empfangssignal E in Nulldurchgängen oder Extrema. Die abgetasteten Spannungswerte Uᵢᵢ entsprechen daher dem maximalen bei dieser Erregerfrequenz fₖ auftretenden Spannungswert Aₖ, also der Amplitude, und die abgetasteten Spannungswerte Uᵢⱼ sind Null. In diesem Beispiel sind nur die Abtastzeitpunkte innerhalb einer Periode dargestellt. Es versteht sich von selbst, dass das Abtasten bei einer Erregerfrequenz fₖ über mehrere Perioden hinweg erfolgen kann, um eine bessere Statistik zu erreichen.

Für den hier gezeigten Fall, dass die vorgegebene Phasenverschiebung Δϕ zwischen Sendesignal S und Empfangssignal E 90° beträgt, fallen die Nulldurchgänge des Sendesignals S mit den Extrema des Empfangssignals E und die Extrema des Sendesignals S mit den Nulldurchgängen des Empfangssignals E zusammen. Bezüglich des Sendesignals S wird das Empfangssignal E also immer zu den Zeitpunkten abgetastet, zu welchen das Sendesignal S eine Nullstelle oder einen Extrempunkt durchläuft.

In Fig. 1 b ist ein Empfangssignal E mit einer Erregerfrequenz fₗ dargestellt, welches sich außerhalb der vorgegebenen Phasenverschiebung Δϕ zum Sendesignal S befindet. Die Abtastzeitpunkte fallen daher nicht mit den Zeitpunkten zusammen, zu welchen das Empfangssignal E einen Nulldurchgang oder ein Extremum durchläuft. Die abgetasteten Spannungswerte Uᵢᵢ unterscheiden sich vom maximalen Spannungswert Aₗ um einen Wert dUᵢᵢ und die abgetasteten Spannungswerte Uᵢⱼ unterscheiden sich von Null um einen Wert dUᵢⱼ.

Die in Fig. 1a und 1 b dargestellten Empfangssignale E sind Wechselspannungen und die Spannungswerte Uᵢᵢ, Uᵢⱼ zu den Abtastzeitpunkten sind teilweise negativ. In einer bevorzugten Ausgestaltung des Verfahrens wird das Empfangssignal E vor dem Abtasten so modifiziert, dass nur noch positive Spannungswerte vorliegen. Dies geschieht beispielsweise durch Invertieren bzw. Gleichrichten der negativen Spannungsanteile. In Fig. 1 c ist das Empfangssignal E aus Fig. 1a nach einer Gleichrichtung dargestellt. Eine weitere Möglichkeit zur Umwandlung der negativen Spannungsanteile ist, eine Gleichspannung auf das Empfangssignal E zu addieren. Hierdurch wird die gesamte das Empfangssignal bildende Spannungskurve um einen bestimmten Wert, den so genannten Offset, in den positiven Bereich verschoben. Das auf diese Weise modifizierte Empfangssignal E ist in Fig. 1d abgebildet. Da dieser Offset für alle im Frequenzsweep enthaltenen Erregerfrequenzen fₖ gleich ist, sind alle abgetasteten Spannungswerte Uᵢᵢ, Uᵢⱼ um den gleichen Wert verschoben. Wird zu dem Empfangssignal ein Offset addiert, so muss dieser Wert bei der Auswertung der abgetasteten Spannungswerte Uᵢᵢ, Uᵢⱼ berücksichtigt werden, da beispielsweise der Spannungswert Uᵢⱼ bei einem Nulldurchgang bei Vorliegen der vorgegebenen Phasenverschiebung Δϕ nicht Null ist, sondern dem Wert der Offsetspannung entspricht.

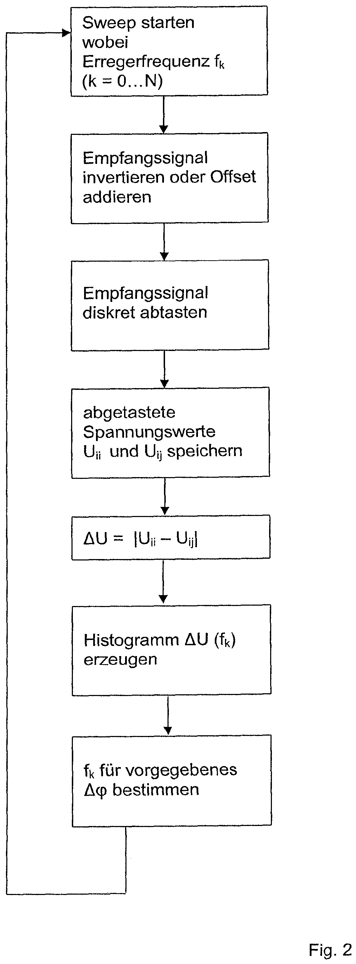

Fig. 2 offenbart ein Flussdiagramm eines Ausführungsbeispiels des erfindungsgemäßen Verfahrens. Im Folgenden wird davon ausgegangen, dass das Empfangssignal E durch Gleichrichten oder Addition einer Gleichspannung nur noch positive Anteile enthält. Auf die Verwendung von Betragszeichen wurde deshalb verzichtet. Es soll aber darauf hingewiesen sein, dass im Falle, dass keine derartige Modifikation des Empfangssignals E stattgefunden hat, bei negativen Spannungswerten die Beträge zu bilden sind.

Während des Frequenzsuchlaufs wird die schwingfähige Einheit mit diskreten Erregerfrequenzen fₖ (k=0...N) innerhalb des gesamten Arbeitsbereiches angeregt. Ziel ist es, diejenige Erregerfrequenz fₖ herauszufiltern, bei welcher das Sendesignal S und das Empfangssignal E eine vorgegebene Phasenverschiebung Δϕ aufweisen, beispielsweise 90°.

Hierzu wird ein Sendesignal S mit einer ersten Erregerfrequenz f₀ erzeugt. Das Empfangssignal E wird zu ausgewählten Zeitpunkten abgetastet. Die Zeitpunkte sind hierbei so ausgewählt, dass bei vorgegebener Phasenverschiebung Δϕ die Extrema und die Nulldurchgänge des Empfangssignals E detektiert werden. Im Fall einer vorgegebenen Phasenverschiebung Δϕ = 90° sind dies die Zeitpunkte, zu denen das Sendesignal S Nulldurchgänge und Extrema durchläuft.

Die bei erwarteten Extrema abgetasteten Spannungswerte Uᵢᵢ und bei erwarteten Nulldurchgängen abgetasteten Spannungswerte Uᵢⱼ werden gespeichert. Die abgetasteten und gespeicherten Spannungswerte Uᵢᵢ, Uᵢⱼ werden verarbeitet, indem jeweils ein Spannungswert Uᵢᵢ, der einem erwarteten Extremum entspricht, von einem darauf folgenden Spannungswert Uᵢⱼ, der einem erwarteten Nullpunkt entspricht, subtrahiert wird. Nach einer festgelegten Anzahl an Schwingungsperioden wird die nächste Erregerfrequenz fₖ eingestellt.

Ist die Erregerfrequenz fₖ diejenige, bei der die Phasenverschiebung Δϕ der vorgegebenen Phasenverschiebung Δϕ entspricht, so entsprechen die zu erwarteten Extrema abgetasteten Spannungswerte Uᵢᵢ dem maximalen Spannungswert, der für die jeweilige Erregerfrequenz fₖ auftritt, also der Amplitude Aₖ der Schwingung. Die zu erwarteten Nulldurchgängen abgetasteten Spannungswerte Uᵢⱼ sind Null. Unterscheidet sich die Erregerfrequenz fₖ jedoch von derjenigen Erregerfrequenz fₖ, bei der die vorgegebene Phasenverschiebung Δϕ vorliegt, so sind die zu den Abtastzeitpunkten detektierten Spannungswerte Uᵢᵢ, Uᵢⱼ geringer als die zugehörige Amplitude Aₖ oder größer als Null. Der Spannungswert Uᵢᵢ, der detektiert wird, ist also nicht der maximale Spannungswert Aₖ, der bei der jeweiligen Erregerfrequenz fₖ auftritt. Bildet man die Differenz jeweils zweier Spannungswerte Uᵢᵢ und Uᵢⱼ, welche beim erwarteten Nulldurchgang und beim erwarteten Extremum abgetastet wurden, so ist diese Differenz ΔU geringer als die Differenz ΔU bei der vorgegebenen Phasenverschiebung Δϕ. Bei der vorgegebenen Phasenverschiebung Δϕ ist die Differenz ΔU gleich der Amplitude Aₖ des Empfangssignals und somit maximal. Wird zu dem Empfangssignal ein Offset addiert, um rein positive Spannungswerte zu erhalten, so muss dieser Wert bei der Auswertung der abgetasteten Spannungswerte Uᵢᵢ, Uᵢⱼ entsprechend berücksichtigt werden.

Eine alternative Ausgestaltung der Verarbeitung der bei einer Erregerfrequenz fₖ abgetasteten Spannungswerte Uᵢᵢ, Uᵢⱼ beinhaltet, dass alle bei einem erwarteten Extremum abgetasteten Spannungswerte Uᵢᵢ zu einem Wert Uₘₐₓ addiert werden, dass alle bei einem erwarteten Nulldurchgang abgetasteten Spannungswerte Uᵢⱼ zu einem Wert U_{Null} addiert werden, und dass anschließend die Differenz ΔU = |Uₘₐₓ- U_{Null}| gebildet wird. Auf diese Weise erhält man einen gemittelten Spannungswert für jede Erregerfrequenz fₖ.

In einem weiteren Verfahrensschritt werden die gebildeten Spannungsdifferenzen ΔU über der jeweiligen Erregerfrequenz fₖ aufgetragen. Das sich ergebende Histogramm weist ein Maximum um diejenige Erregerfrequenz fₖ auf, welche der vorgegebenen Phasenverschiebung Δϕ entspricht.

In diesem Ausführungsbeispiel werden sowohl erwartete Nulldurchgänge als auch erwartete Extrema abgetastet und dann die Differenz ΔU zwischen den Spannungswerten Uᵢᵢ, Uᵢⱼ gebildet. In einer alternativen Ausführung des Verfahrens wird das Empfangssignal E nur zu Zeitpunkten erwarteter Extrema abgetastet. Entspricht das Empfangssignal E bei der Erregerfrequenz fₖ einer Schwingung mit der vorgegebenen Phasenverschiebung Δϕ, so wird die Schwingungsamplitude Aₖ detektiert. Entspricht das Empfangssignal E bei der Erregerfrequenz fₖ nicht der Schwingung mit der vorgegebenen Phasenverschiebung Δϕ, so wird nicht die Amplitude Aₖ detektiert sondern ein geringerer Wert. Trägt man die bei verschiedenen Erregerfrequenzen fₖ bestimmten Spannungswerte Uᵢᵢ auf, so ergibt sich eine Kurve mit einem Maximum bei derjenigen Erregerfrequenz fₖ, bei welcher das Sendesignal S und das Empfangssignal E die vorgegebene Phasenverschiebung Δϕ aufweisen. Analog zum für die Differenzbildung beschriebenen Fall können die abgetasteten Spannungswerte Uᵢᵢ über mehrere Schwingungsperioden aufaddiert werden, sodass im Histogramm pro Erregerfrequenz fₖ nur ein Spannungswert Σ Uᵢᵢ aufgeführt wird. Alternativ ist es möglich, alle abgetasteten Spannungswerte Uᵢᵢ getrennt aufzulisten.

Es ist vorgesehen, dass sobald ein Frequenzsuchlauf beendet ist, ein erneuter Frequenzsuchlauf gestartet wird, die Frequenzsuchläufe also kontinuierlich durchgeführt werden. Auf diese Weise kann auf veränderte Prozessbedingungen schnell reagiert werden und die Schwingfrequenz der schwingfähigen Einheit sofort angepasst werden.

Alternativ hierzu wird die schwingfähige Einheit mit der im Frequenzsuchlauf bestimmten Erregerfrequenz fₖ angeregt. Erneute Frequenzsuchläufe finden dann beispielsweise in bestimmten Intervallen statt oder werden auf Abruf gestartet.

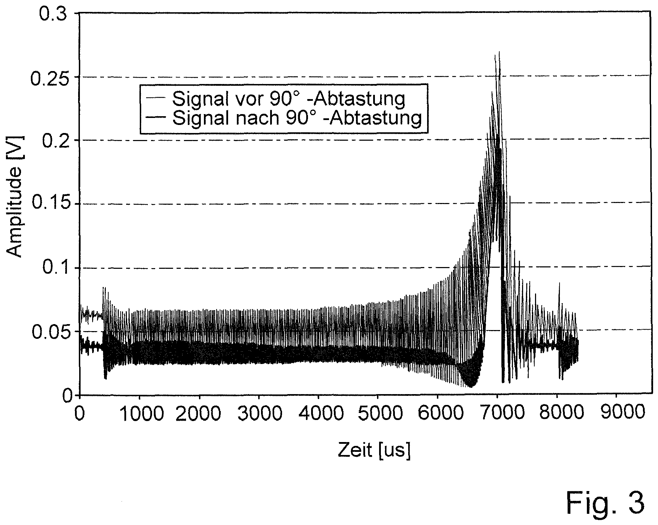

Fig. 3 zeigt ein Histogramm zur Bestimmung derjenigen Erregerfrequenz fₖ, bei welcher das Sendesignal S und das Empfangssignal E die vorgegebene Phasenverschiebung Δϕ aufweisen. Neben dem nach dem in Figur 2 beschriebenen Verfahren abgetasteten Empfangssignal E ist das Empfangssignal E vor der Abtastung dargestellt. Das Maximum um die der vorgegebenen Phasenverschiebung Δϕ entsprechenden Erregerfrequenz fₖ ist in beiden Kurven deutlich ausgeprägt. Das abgetastete Empfangssignal E ist jedoch schärfer begrenzt und weist ein höheres Verhältnis zwischen Maximum und Grundlinie auf.

Das in diesem Histogramm dargestellte Empfangssignal E stammt von einem Membranschwinger.

### Bezugszeichenliste

- E: Empfangssignal
- S: Sendesignal
- Δϕ: Phasenverschiebung zwischen Sendesignal und Empfangssignal
- fₖ: im Frequenzsweep enthaltene Erregerfrequenz
- Aₖ: Amplitude des Empfangssignals mit der Frequenz fₖ/ maximaler Spannungswert
- Uᵢᵢ: zu den Zeitpunkten, zu denen ein Extremum des Empfangssignals erwartet wird, abgetastete Spannungswerte des Empfangssignals
- Uᵢⱼ: zu den Zeitpunkten, zu denen ein Nulldurchgang des Empfangssignals erwartet wird, abgetastete Spannungswerte des Empfangssignals
- dUᵢᵢ: Differenz zwischen Uᵢᵢ und Aₖ
- dUᵢⱼ: Differenz zwischen Uᵢⱼ und Null

## Patentansprüche

1. Verfahren zur Bestimmung und/oder Überwachung mindestens einer physikalischen Prozessgröße eines Mediums mit einer schwingfähigen Einheit, wobei die schwingfähige Einheit mittels eines Frequenzsuchlaufs (Sweep) innerhalb eines vorbestimmten Frequenzbandes im Arbeitsbereich der schwingfähigen Einheit in Form von Sendesignalen (S) sukzessive mit aufeinander folgenden diskreten Erregerfrequenzen (fₖ) zu Schwingungen angeregt wird, wobei die entsprechenden Schwingungen der schwingfähigen Einheit in Form von Empfangssignalen (E) empfangen werden, wobei über den Frequenzsuchlauf die Erregerfrequenz (fₖ) ermittelt wird, bei der die schwingfähige Einheit mit einer Schwingungsfrequenz schwingt, die eine vorgegebene Phasenverschiebung (Δϕ) zwischen dem Sendesignal (S) und dem Empfangssignal (E) aufweist, und wobei eine Sende-/Empfangseinheit die schwingfähige Einheit mit der ermittelten Schwingfrequenz zu Schwingungen anregt oder wobei der nachfolgende Frequenzsuchlauf gestartet wird,
**dadurch gekennzeichnet,**
**dass** die Schwingfrequenz bei der vorgegebenen Phasenverschiebung (Δϕ) dadurch ermittelt wird, dass das Empfangssignal (E) zu ausgewählten Zeitpunkten diskret abgetastet wird, wobei die ausgewählten Zeitpunkte von der vorgegebenen Phasenverschiebung (Δϕ) zwischen Sendesignal (S) und Empfangssignal (E) abhängen
und **dass** die bei den diskreten Erregerfrequenzen (fₖ) abgetasteten Spannungswerte Uᵢ des Empfangssignals (E) in Bezug auf deren Amplitude ausgewertet werden.

2. Verfahren nach Anspruch 1,
**dadurch gekennzeichnet,**
**dass** zur Auswertung der abgetasteten Spannungswerte Uᵢ des Empfangssignals (E) die negativen Anteile des Empfangssignals (E) durch Gleichrichtung oder durch Addieren einer Offsetspannung in positive Spannungswerte |Uᵢ| umgewandelt werden.

3. Verfahren nach Anspruch 1 oder 2,
**dadurch gekennzeichnet,**
**dass** das Empfangssignal (E) immer zu den Zeitpunkten abgetastet wird, zu welchen es bei Vorliegen der vorgegebenen Phasenverschiebung (Δϕ) zwischen Sendesignal (S) und Empfangssignal (E) ein Extremum durchläuft

4. Verfahren nach mindestens einem der Ansprüche 1-3 ,
**dadurch gekennzeichnet,**
**dass** für den Fall, dass die vorgegebene Phasenverschiebung (Δϕ) 90° beträgt, das Empfangssignal (E) immerzu den Zeitpunkten abgetastet wird, zu welchen das Sendesignal (S) bei Vorliegen der vorgegebenen Phasenverschiebung (Δϕ) einen Nulldurchgang durchläuft.

5. Verfahren nach Anspruch 3 oder 4,
**dadurch gekennzeichnet,**
**dass** die abgetasteten Spannungswerte Uᵢ des Empfangssignals (E) ausgewertet werden, indem die Erregerfrequenz (fₖ) bestimmt wird, bei welcher der Betrag des Spannungswerts |Uᵢ| maximal ist.

6. Verfahren nach Anspruch 3 oder 4,
**dadurch gekennzeichnet,**
**dass** die abgetasteten Spannungswerte Uᵢ des Empfangssignals (E) ausgewertet werden, indem die Beträge der über mehrere Schwingungsperioden gleicher Frequenz (fₖ) hinweg abgetasteten Spannungswerte |Uᵢ| zu einem Wert Σ |Uᵢ| addiert werden und die Erregerfrequenz (fₖ) bestimmt wird, bei welcher der zugehörige Wert Σ |Uᵢ| maximal ist.

7. Verfahren nach Anspruch 1 oder 2,
**dadurch gekennzeichnet,**
**dass** das Empfangssignal (E) immer zu den Zeitpunkten abgetastet wird, zu welchen es bei Vorliegen der vorgegebenen Phasenverschiebung (Δϕ) zwischen Sendesignal (S) und Empfangssignal (E) Nulldurchgänge und Extrema durchläuft

8. Verfahren nach Anspruch 1,2 oder 7,
**dadurch gekennzeichnet,**
**dass** für den Fall, dass die vorgegebene Phasenverschiebung (Δϕ) 90° beträgt, das Empfangssignal (E) immer zu den Zeitpunkten abgetastet wird, zu welchen das Sendesignal (S) bei Vorliegen der vorgegebenen Phasenverschiebung (Δϕ) einen Nulldurchgang durchläuft und zu den Zeitpunkten, zu welchen das Sendesignal (S) ein Extremum durchläuft.

9. Verfahren nach Anspruch 7 oder 8,
**dadurch gekennzeichnet,**
**dass** die abgetasteten Spannungswerte Uᵢᵢ, Uᵢⱼ des Empfangssignals ausgewertet werden, indem die Beträge jeweils zwei aufeinander folgender Spannungswerte |Uᵢᵢ| |Uᵢⱼ|, welche bei der vorgegebenen Phasenverschiebung (Δϕ) dem Betrag des Spannungswerts bei einem Nulldurchgang und dem Betrag des Spannungswerts an einem Extremum des Empfangssignals (E) entsprechen, voneinander subtrahiert werden, und die Erregerfrequenz bestimmt wird, bei welcher die Differenz ΔU = |Uᵢᵢ| - |Uᵢⱼ| betragsmäßig maximal ist.

10. Verfahren nach Anspruch 7 oder 8,
**dadurch gekennzeichnet,**
**dass** die über mehrere Schwingungsperioden gleicher Frequenz (fₖ) hinweg abgetasteten Spannungswerte Uᵢᵢ, Uᵢⱼ des Empfangssignals (E) so ausgewertet werden, dass die Beträge der abgetasteten Spannungswerte |Uᵢᵢ|, welche zu den Zeitpunkten abgetastet wurden, die bei der vorgegebenen Phasenverschiebung (Δϕ) der Lage eines Extremums entsprechen, zu einem Wert Uₘₐₓ addiert werden, dass die Beträge der abgetasteten Spannungswerte |Uᵢⱼ|, welche zu den Zeitpunkten abgetastet wurden, die bei der vorgegebenen Phasenverschiebung (Δϕ) der Lage eines Nulldurchgangs entsprechen, zu einem Wert U_{Null} addiert werden,
**dass** die Werte Uₘₐₓ und U_{Null} voneinander subtrahiert werden und dass die Erregerfrequenz bestimmt wird, bei welcher die Differenz ΔU = Uₘₐₓ -U_{Null} betragsmäßig maximal ist.

11. Verfahren nach mindestens einem der vorangehenden Ansprüche,
**dadurch gekennzeichnet,**
**dass** eine Phasenverschiebung (Δϕ) zwischen Sendesignal (S) und Empfangssignal (E) eingestellt wird, die von der Güte der schwingfähigen Einheit abhängt.

12. Verfahren nach mindestens einem der vorangehenden Ansprüche,
**dadurch gekennzeichnet,**
**dass** eine Phasenverschiebung (Δϕ) zwischen Sendesignal (S) und Empfangssignal (E) eingestellt wird, welche bevorzugt im Bereich zwischen 70° und 120° liegt.

13. Verfahren nach mindestens einem der vorangehenden Ansprüche,
**dadurch gekennzeichnet,**
**dass** es sich bei der physikalischen Messgröße um einen vorbestimmten Füllstand des Mediums in einem Behälter, um die Dichte, die Viskosität, oder die Phasengrenze des Mediums handelt.

## Claims

1. Procedure designed to determine and/or monitor at least one physical process variable of a medium with an unit capable of oscillation, wherein the unit capable of oscillation is gradually excited to vibrate with consecutive discrete exciter frequencies (fₖ) via a sweep within a predefined frequency band in the operational range of the unit capable of oscillation in the form of transmission signals (S), wherein the corresponding vibrations of the unit capable of oscillation are received in the form of reception signals (E), the sweep determining the exciter frequency (fₖ) at which the unit capable of oscillation vibrates at a vibration frequency that has a predefined phase shift (Δϕ) between the transmission signal (S) and the reception signal (E), and wherein a transmitter/receiver unit excites the unit capable of oscillation to vibrate at the determined vibration frequency or wherein the subsequent sweep is performed,
**characterized in that**
the vibration frequency at the predefined phase shift (Δϕ) is determined **in that** the reception signal (E) is scanned in a discrete manner at selected times, the selected times depending on the predefined phase shift (Δϕ) between the transmission signal (S) and the reception signal (E)
and **in that** the voltage values Uᵢ of the reception signal (E) that are scanned at the discrete exciter frequencies (fₖ) are evaluated with regard to their amplitude.

2. Procedure as claimed in Claim 1,
**characterized in that**
in order to evaluate the scanned voltage values Uᵢ of the reception signal (E), the negative components of the reception signal (E) are converted to positive voltage values |Uᵢ| by rectification or by adding an offset voltage.

3. Procedure as claimed in Claim 1 or 2,
**characterized in that**
the reception signal (E) is always scanned at the times when it passes through an extremum in the presence of the predefined phase shift (Δϕ) between the transmission signal (S) and the reception signal (E).

4. Procedure as claimed in at least one of the Claims 1 to 3,
**characterized in that**
if the predefined phase shift (Δϕ) is 90°, the reception signal (E) is always scanned at the times when the transmission signal (S) passes a zero crossing in the presence of the predefined phase shift (Δϕ).

5. Procedure as claimed in Claim 3 or 4,
**characterized in that**
the scanned voltage values Uᵢ of the reception signal (E) are evaluated by determining the exciter frequency (fₖ) at which the value of the voltage |Uᵢ| is the maximum.

6. Procedure as claimed in Claim 3 or 4,
**characterized in that**
the scanned voltage values Uᵢ of the reception signal (E) are evaluated by adding the amounts of the voltage values |Uᵢ| scanned over several oscillation periods of the same frequency (fₖ) to form one value Σ |Uᵢ|, and **in that** the exciter frequency (fₖ) is determined at which the corresponding value Σ |Uᵢ| is the maximum.

7. Procedure as claimed in Claim 1 or 2,
**characterized in that**
the reception signal (E) is always scanned at the times it passes zero crossings and extreme values in the presence of the predefined phase shift (Δϕ) between the transmission signal (S) and the reception signal (E).

8. Procedure as claimed in Claim 1, 2 or 7
**characterized in that**
if the predefined phase shift (Δϕ) is 90°, the reception signal (E) is always scanned at the times the transmission signal (S) passes a zero crossing and at times the transmission signal (S) passes an extremum in the presence of the predefined phase shift (Δϕ).

9. Procedure as claimed in Claim 7 or 8
**characterized in that**
the scanned voltage values Uᵢ, Uⱼ of the reception signal are evaluated by subtracting from one another the values of two consecutive voltage values |Uᵢ|, |Uⱼ| which, in the presence of the predefined phase shift (Δϕ), correspond to the value of the voltage at a zero crossing and the value of the voltage at an extremum of the reception signal (E), and **in that** the exciter frequency is determined at which the value of the difference Δ|Uᵢ| - |Uⱼ| is the maximum.

10. Procedure as claimed in Claim 7 or 8
**characterized in that**
the voltage values Uᵢ, Uⱼ of the reception signal (E) that are scanned over multiple oscillation periods of the same frequency (fₖ) are evaluated in such a way that the values of the scanned voltage values |Uᵢ|, which were scanned at the times that correspond to the position of the extremum in the presence of the predefined phase shift (Δϕ), are added to form one value Uₘₐₓ, and in such a way that the values of the scanned voltage values |Uⱼ| that were scanned at the times that correspond to the position of a zero crossing in the presence of the predefined phase shift (Δϕ), are added to form a value U_{Null},
**in that** the values Uₘₐₓ and U_{Null} are subtracted from one another and **in that** the exciter frequency is determined at which the difference ΔU = Uₘₐₓ - U_{Null} is the maximum.

11. Procedure as claimed in at least one of the previous claims,
**characterized in that**
a phase shift (Δϕ) that depends on the quality of the unit capable of oscillation is set between the transmission signal (S) and the reception signal (E).

12. Procedure as claimed in at least one of the previous claims,
**characterized in that**
a phase shift (Δϕ) which is preferably in the range between 70° and 120° is set between the transmission signal (S) and the reception signal (E).

13. Procedure as claimed in at least one of the previous claims,
**characterized in that**
the physical variable is a predefined level of the medium in a vessel, the density, the viscosity or the phase interface of the medium.

## Revendications

1. Procédé destiné à la détermination et/ou la surveillance d'au moins une grandeur process physique d'un produit avec une unité apte à vibrer, procédé pour lequel l'unité apte à vibrer est excitée en vibrations au moyen d'un balayage de fréquence au sein d'une bande de fréquence prédéfinie dans la plage de travail de l'unité apte à vibrer, sous la forme de signaux d'émission (S), successivement avec des fréquences d'excitation (fₖ) discrètes consécutives, les vibrations correspondantes de l'unité apte à vibrer étant reçues sous la forme de signaux de réception (E), le balayage de fréquence déterminant la fréquence d'excitation (fₖ) à laquelle l'unité apte à vibrer vibre à une fréquence de vibration présentant un déphasage (Δϕ) prédéfini entre le signal d'émission (S) et le signal de réception (E), et une unité d'émission / de réception excitant en vibrations l'unité apte à vibrer et le balayage de fréquence suivant étant démarré,
**caractérisé**
**en ce que** la fréquence de vibration pour le déphasage (Δϕ) prédéfini est déterminée en ce que le signal de réception (E) est échantillonné de manière discrète en des instants sélectionnés, les instants sélectionnés dépendant du déphasage (Δϕ) prédéfini entre le signal d'émission (S) et le signal de réception (E)
et **en ce que** l'amplitude des tension Uᵢ du signal de réception (E) est exploitée pour les fréquences d'excitation (fₖ) discrètes échantillonnées.

2. Procédé selon la revendication 1,
**caractérisé**
**en ce que** pour l'exploitation des valeurs de tension Uᵢ du signal de réception (E) les parts négatives du signal de réception (E) sont converties en tensions positives |Uᵢ| par le redressement ou l'ajout d'une tension de décalage.

3. Procédé selon la revendication 1 ou 2,
**caractérisé**
**en ce que** le signal de réception (E) est toujours échantillonné aux instants auxquels ils passe par un extremum en présence du déphasage (Δϕ) prédéfini entre le signal d'émission (S) et le signal de réception (E).

4. Procédé selon au moins l'une des revendications 1 à 3,
**caractérisé**
**en ce que**, pour le cas où le déphasage (Δϕ) prédéfini est de 90°, le signal de réception (E) est toujours échantillonné aux instants auxquels le signal d'émission (S) effectue un passage par zéro en présence du déphasage (Δϕ) prédéfini.

5. Procédé selon la revendication 3 ou 4,
**caractérisé**
**en ce que** les valeurs de tension Uᵢ échantillonnées du signal de réception (E) sont exploitées en ce qu'est déterminée la fréquence d'excitation (fₖ) à laquelle la valeur de la tension |Uᵢ| est maximale.

6. Procédé selon la revendication 3 ou 4,
**caractérisé**
**en ce que** les tensions Uᵢ échantillonnées du signal de réception (E) sont exploitées en ce que les valeurs des tensions |Uᵢ| échantillonnées sur plusieurs périodes de vibration de même fréquence (fₖ) sont ajoutées en une valeur Σ |Uᵢ|, et en ce qu'est déterminée la fréquence d'excitation (fₖ) à laquelle la valeur Σ |Uᵢ| correspondante est maximale.

7. Procédé selon la revendication 1 ou 2,
**caractérisé**
**en ce que** le signal de réception (E) est toujours échantillonné à des instants auxquels il effectue des passages par zéro et par des extremums en présence du déphasage (Δϕ) prédéfini entre le signal d'émission (E) et le signal de réception (E).

8. Procédé selon la revendication 1, 2 ou 7,
**caractérisé**
**en ce que**, pour le cas où le déphasage (Δϕ) prédéfini est de 90°, le signal de réception (E) est toujours échantillonné aux instants auxquels le signal d'émission (S) effectue un passage par zéro et aux instants auxquels le signal d'émission (S) passe par un extremum en présence du déphasage (Δϕ) prédéfini.

9. Procédé selon la revendication 7 ou 8,
**caractérisé**
**en ce que** les tensions Uᵢ, Uⱼ échantillonnées du signal de réception sont exploitées en ce que sont soustraites l'une de l'autre les valeurs de deux tensions |Uᵢ|, |Uⱼ| consécutives, lesquelles correspondent, en présence du déphasage (Δϕ) prédéfini, à la valeur de la tension à un passage par zéro et à la valeur de la tension à un extremum du signal de réception (E), et en ce qu'est déterminée la fréquence d'excitation, à laquelle la valeur de la différence Δ|Uᵢ| - |Uⱼ| est maximale.

10. Procédé selon la revendication 7 ou 8,
**caractérisé**
**en ce que** les tensions Uᵢ, Uⱼ échantillonnées sur plusieurs périodes de vibration de même fréquence (fₖ) du signal de réception (E) sont exploitées de telle sorte que les valeurs des tensions |Uᵢ| échantillonnées, lesquelles sont échantillonnées aux instants qui correspondent à la position d'un extremum en présence du déphasage (Δϕ) prédéfini, sont ajoutées en une valeur Uₘₐₓ, et de telle sorte que les valeurs des tensions |Uⱼ| échantillonnées, lesquelles sont échantillonnées aux instants qui correspondent à la position d'un passage par zéro en présence du déphasage (Δϕ) prédéfini, sont ajoutées en une valeur U_{Null},
**en ce que** les valeurs Uₘₐₓ et U_{Null} sont soustraites l'une de l'autre et en ce qu'est déterminée la fréquence d'excitation, à laquelle la valeur de la différence ΔU = Uₘₐₓ - U_{Null} est maximale.

11. Procédé selon l'une des revendications précédentes,
**caractérisé**
**en ce qu'**est réglé entre le signal d'émission (S) et le signal de réception (E) un déphasage (Δϕ) qui dépend de la qualité de l'unité apte à vibrer.

12. Procédé selon l'une des revendications précédentes,
**caractérisé**
**en ce qu'**est réglé entre le signal d'émission (S) et le signal de réception (E) un déphasage (Δϕ) qui se situe de préférence dans une plage comprise entre 70° et 120°.

13. Procédé selon l'une des revendications précédentes,
**caractérisé**
**en ce que** concernant la grandeur de mesure physique, il s'agit d'un niveau prédéfini du produit dans un réservoir, de la densité, de la viscosité ou de l'interface du produit.
